# EUROPEAN PATENT APPLICATION

(11) **EP 4 254 855 A1**
(43) Date of publication of application: **04.10.2023**
(21) Application number: 22275040.8
(22) Date of filing: 31.03.2022
(51) Int. Cl.: H04L 9/08, H04L 9/32

(54) **A DEVICE AND A METHOD FOR CONTROLLING USE OF A CRYPTOGRAPHIC KEY**

(71) Applicant: nCipher Security Limited, Cambridge CB1 2GA (GB)
(72) Inventor: KETTLEWELL, Richard John, Cambridge, CB1 2GA (GB)
(74) Representative: Marks & Clerk LLP

(57) **Abstract**

A computer-implemented method for controlling use of a first cryptographic key in a device, wherein the device stores first information specifying the configuration of the device. The method comprising: obtaining the first cryptographic key and second information specifying a device configuration for which use of the first cryptographic key is permitted; comparing the second information with the first information to determine whether the first information is consistent with the second information; and in response to determining that the first information is consistent with the second information, performing a first operation using the first cryptographic key on the device.

## Description

### Field

The present invention relates to a device and a method for controlling use of a cryptographic key. The device may be a Hardware Security Module for example.

### Background

Various devices may be used to perform cryptographic algorithms. A Hardware Security Module (HSM) is a device that securely stores and manages cryptographic keys, and performs a set of cryptographic algorithms. In many cases, an initialisation process is performed by a user before the HSM is put into service, for example prior to deployment. The initialisation process may comprise loading a master key into the HSM's persistent storage and establishing global HSM configuration settings.

A master key is a cryptographic key that is used to secure a user's cryptographic keys. In particular, the master key can be used to encrypt other cryptographic keys (e.g. application keys) for storage outside the HSM. A security vulnerability associated with the use of the master key may impact the security of all of the keys that are encrypted by the master key.

### Brief Description of the Figures

Devices and methods in accordance with non-limiting embodiments will now be described with reference to the accompanying figures in which:
Fig. 1 shows a schematic illustration of a hardware security module device in accordance with an embodiment;
Fig. 2 shows a method of controlling the use of a first cryptographic key according to an embodiment;
Fig. 3 shows a method of controlling the use of a first cryptographic key according to another embodiment;
Fig. 4 shows a method of controlling the use of a first cryptographic key according to a further embodiment;
Fig. 5A shows a comparison of the *"exact match"* and the *"at least* as *strict"* criteria according to a first example;
Fig. 5B shows a comparison of the *"exact match"* and the *"at least* as *strict"* criteria according to a second example;
Fig. 5C shows a comparison of the *"exact match"* and the *"at least* as *strict"* criteria according to a third example;
Fig. 5D shows a comparison of the *"exact match"* and the *"at least* as *strict"* criteria according to a fourth example;
Fig. 5E shows a comparison of the *"exact match"* and the *"at least* as *strict"* criteria according to a fifth example.

Throughout the figures, the same reference numerals are used to refer to the same components or functionality.

### Detailed Description

According to a first aspect there is provided a computer-implemented method for controlling use of a first cryptographic key in a device, wherein the device stores first information specifying the configuration of the device. The method comprising: obtaining the first cryptographic key and second information specifying a device configuration for which use of the first cryptographic key is permitted; comparing the second information with the first information to determine whether the first information is consistent with the second information; and in response to determining that the first information is consistent with the second information, performing a first operation using the first cryptographic key on the device.

In an embodiment the device is a Hardware Security Module (HSM).

In an embodiment the Hardware Security Module is configured according to the information specifying the first configuration.

In an embodiment the method comprises performing the first operation only if the first information is consistent with the second information.

In an embodiment the obtaining and comparing steps are performed by the device.

In an embodiment obtaining the first cryptographic key and the second information comprises: receiving a command to store the first cryptographic key in a persistent storage of the device, wherein the command comprises the first cryptographic key in encrypted form and the second information, wherein the first cryptographic key and the second information are bound together, and wherein performing the first operation comprises storing the first cryptographic key in the persistent storage.

In an embodiment the method further comprises, in response to determining that the first information is not consistent with the second information, rejecting the command to store the first cryptographic key.

In an embodiment obtaining the first cryptographic key and the second information comprises: retrieving the first cryptographic key and the second information from persistent storage of the device in response to receiving a command to use the first cryptographic key in the first operation.

In an embodiment the method further comprises, in response to determining that the first information is not consistent with the second information, rejecting the command to use the first cryptographic key in the first operation.

In an embodiment the method further comprises: receiving a command to store the first cryptographic key in a persistent storage of the device, wherein the command comprises the first cryptographic key in encrypted form, the second information, and wherein the first cryptographic key and the second information are bound together.

In an embodiment the first operation comprises decrypting a second cryptographic key using the first cryptographic key or generating a second cryptographic key using the first cryptographic key.

In an embodiment the first information comprises a first set of configurable properties; the second information comprises a second set of configurable properties; and wherein: the first and second set of configurable properties each comprise at least one of: an enabled functionality of the device, an identity of a cryptographic key, an operation that can be performed to the master key, a compliance mode of the device, enabled/disabled cryptographic algorithms, Input/Output settings of the device, and attributes of the device. Optionally, the configurable property in the first information may not be the same as the configurable property in the second information.

In an embodiment determining whether the first information is consistent with the second information comprises: determining that the first information is consistent with the second information in response to determining that the first set of configurable properties consists of the second set of configurable properties.

In an embodiment the first information is consistent with the second information if the first information contains at least the configurable properties in the second information, and only the configurable properties in the second information. (i.e. the same configurable properties and no more).

In an embodiment the method further comprises determining that the first information is not consistent with the second information if the first set of configurable properties does not consist of the second set of configurable properties.

In an embodiment the first set of configurable properties comprises a first configurable property having a first value, the second set of configurable properties comprises the first configurable property having a second value and wherein determining whether the first information is consistent with the second information comprises: determining that the first information is consistent with the second information in response to determining that first value is equal to the second value.

In an embodiment determining whether the first information is consistent with the second information comprises: determining that the first information is consistent with the second information in response to determining that the first set of configurable properties comprises the second set of configurable properties.

In an embodiment the method further comprises determining that the first information is not consistent with the second information if the first set of configurable properties does not comprise the second set of configurable properties.

In an embodiment the first set of configurable properties comprises a first configurable property having a first value, the second set of configurable properties comprises the first configurable property having a second value and wherein determining whether the first information is consistent with the second information comprises: determining that the first information is consistent with the second information in response to determining that first value is equal to or greater than the second value.

In an embodiment obtaining the first cryptographic key and second information comprises receiving the first cryptographic key and the second information combined and in encrypted form.

In an embodiment the first cryptographic key and the second information are received via a secure channel between the device and a user.

In an embodiment obtaining the first cryptographic key and second information comprises receiving cryptographic signature information. Optionally the first cryptographic key and the second information are encrypted using a communication key.

In an embodiment the device has access to the communication key.

According to a second aspect there is provided a computer-readable medium comprising instructions which, when executed by a processor, cause the processor to carry out the computer-implemented method of any preceding embodiment.

According to a third aspect there is provided a computer-implemented method, comprising: generating a first cryptographic key and information specifying a device configuration for which use of the first cryptographic key is permitted; generating a command to store the first cryptographic key in a device, wherein the command comprises the first cryptographic key in encrypted form, and the information specifying the device configuration, and wherein the first cryptographic key and the second information are bound together; and sending the command to a device.

According to a fourth aspect there is provided a computer-readable medium comprising instructions which, when executed by a processor, cause the processor to carry out the computer-implemented method of the third aspect.

According to a fifth aspect there is provided a security device comprising: a persistent memory configured to store first information specifying the configuration of the device; and one or more processors, the one or more processors configured to: obtain a first cryptographic key and second information specifying a device configuration for which use of the first cryptographic key is permitted; compare the second information with the first information to determine whether the first information is consistent with the second information; and in response to determining that the first information is consistent with the second information, perform a first operation using the first cryptographic key on the device.

In an embodiment the security device is further configured, when obtaining the first cryptographic key and the second information, to receive a command to store the first cryptographic key in a persistent storage of the device, wherein the command comprises the first cryptographic key in encrypted form and the second information, wherein the first cryptographic key and the second information are bound together, and wherein performing the first operation comprises storing the first cryptographic key in the persistent storage.

In an embodiment the security device is further configured to reject the command to store the first cryptographic key in response to determining that the first information is not consistent with the second information.

In an embodiment the security device is further configured, when obtaining the first cryptographic key and the second information, to: retrieve the first cryptographic key and the second information from persistent storage of the device in response to receiving a command to use the first cryptographic key in the first operation.

In an embodiment the security device is further configured to reject the command to use the first cryptographic key in the first operation in response to determining that the first information is not consistent with the second information.

In an embodiment the first operation comprises decrypting a second cryptographic key using the first cryptographic key or generating a second cryptographic key using the first cryptographic key.

In an embodiment the security device comprises a first set of configurable properties; the second information comprises a second set of configurable properties; and wherein the first and second set of configurable properties each comprise at least one of: an enabled functionality of the device, an identity of a cryptographic key, an operation that can be performed to the master key, a compliance mode of the device, enabled/disabled cryptographic algorithms, Input/Output settings of the device, and attributes of the device.

In an embodiment the security device is further configured, when determining whether the first information is consistent with the second information, to: determine that the first information is consistent with the second information in response to determining that the first set of configurable properties consists of the second set of configurable properties.

In an embodiment the security device is further configured, when determining whether the first information is consistent with the second information, to: determine that the first information is consistent with the second information in response to determining that the first set of configurable properties comprises the second set of configurable properties.

In an embodiment the first set of configurable properties comprises a first configurable property having a first value, the second set of configurable properties comprises the first configurable property having a second value and wherein the security device is further configured, when determining whether the first information is consistent with the second information, to: determine that the first information is consistent with the second information in response to determining that first value is equal to or greater than the second value.

In an embodiment the security device is further configured, when obtaining the first cryptographic key and second information, to receive the first cryptographic key and the second information combined and in encrypted form.

In an embodiment the security device is further configured, when obtaining the first cryptographic key and second information, to receive cryptographic signature information.

According to a sixth aspect there is provided a user device, comprising one or more processors, the one or more processors configured to: generate a first cryptographic key and information specifying a security device configuration for which use of the first cryptographic key is permitted; generate a command to store the first cryptographic key in a security device, wherein the command comprises the first cryptographic key in encrypted form, the information specifying the security device configuration, and information binding the second information to the first cryptographic key, and send the command to a security device.

According to a seventh aspect there is provided a system comprising: a user device; and a security device as discussed above, wherein: the user device is communicatively coupled to the security device and is configured to transmit a command to the security device during an initialisation process, wherein the command comprises the first cryptographic key and the second information.

The methods are computer-implemented methods. Since some methods in accordance with embodiments can be implemented by software, some embodiments encompass computer code provided on any suitable carrier medium. The carrier medium can comprise any storage medium such as a CD ROM, a magnetic device or a programmable memory device, or any transient medium such as any signal e.g. an electrical, optical or microwave signal. The carrier medium may comprise a non-transitory computer readable storage medium.

Various devices may be used to perform cryptographic algorithms. A Hardware Security Module (HSM) is a device that securely stores and manages cryptographic keys, and performs a set of cryptographic algorithms. In many cases, an initialisation process is performed by a user before the HSM is put into service, for example prior to deployment. The initialisation process may comprise loading a master key into the HSM's persistent storage and establishing global HSM configuration settings.

A master key is a cryptographic key that is used to secure a user's cryptographic keys. In particular, the master key can be used to encrypt other cryptographic keys for storage outside the HSM. For example, the master key can be used to encrypt application keys for storage outside the HSM.

The configuration settings of the HSM can control which cryptographic algorithms can be executed by the HSM for example. Controlling the cryptographic algorithms that can be executed by the HSM can be done both for security purposes (e.g. to disable potentially insecure algorithms) and for compliance reasons (e.g. to satisfy particular user requirements). For example, the configuration settings can include enable/disable bits for selected cryptographic algorithms.

If the master key is used in a HSM with an improper configuration, possible consequences include violating the user's policy on how their cryptographic keys are used or violating the compliance requirements for the cryptographic keys. This could result in a security vulnerability that jeopardises the security of the master key and all keys that are secured by the master key (e.g. the application keys). However, the user is reliant, during the initialisation process, on the security of a computing device that executes the initialisation process with the HSM device on the user's behalf to ensure the configuration settings. In other words, the user may instruct the computing device as to the desired configuration settings for the HSM device. However, the user must then trust that the computing device provides these same configuration settings to the HSM device during the initialisation process. For example, if the computing device is controlled by another party, the user must trust that this other party does not alter the desired configuration settings before providing them to the HSM device. Furthermore, the user must trust the security of the computing device. For example, the user must trust that a malicious third party is not able to access the computing device and alter the desired configuration settings before they are provided to the HSM device.

For example, where the user uses a HSM which is located in a service provider system, the initialisation process is executed by a host computing device in the service provider system. During initialisation, the user computing device provides the user master key and information specifying the desired HSM configuration settings to the service provider host computing device. However, the user must then rely on the service provider host computing device to initialise the HSM with the desired HSM configuration settings. If the service provider is compromised for example, a master key could be used in an improperly configured HSM, thereby jeopardising the security of the master key and all of the keys that the master key secured. Even in an example where the HSM is located in the user system, and the host computing device is part of the user system (rather than part of a service provider system), the host computing device may still not be fully trusted - for example, this device may be manufactured by a separate party. Other situations could also arise where a master key is used in a HSM that is improperly configured. For example, human-error could arise, whereby a user transfers a master key to a HSM that is improperly configured. In this case, the security of the master key could be compromised.

In each of these cases a user has to place trust in a party to ensure that the master key is used in a HSM that is appropriately configured in order to maintain the security of the master key, whether that is: 1) trust in a service provider (e.g. to configure the HSM according to the configuration instructions provided to it), 2) trust in the parties manufacturing or maintaining the user computing devices used to configure the HSM, or 3) trust in an individual user (e.g. to load a master key onto a HSM that is appropriately configured).

In the examples described below, a policy setting out the user's HSM configuration requirements is bound to the user's master key. The policy constrains the master key to be used only when the HSM is properly configured. In some examples, the policy prevents the master key from being transferred to persistent storage unless the HSM is in a proper configuration. In other examples, the policy prevents use of the master key from persistent storage unless the HSM is in the proper configuration. The user binds the policy to the master key, for example in an HSM or on the user system, meaning that the HSM can confirm that the policy originates from the user, and that the configuration settings of the HSM are consistent with the policy.

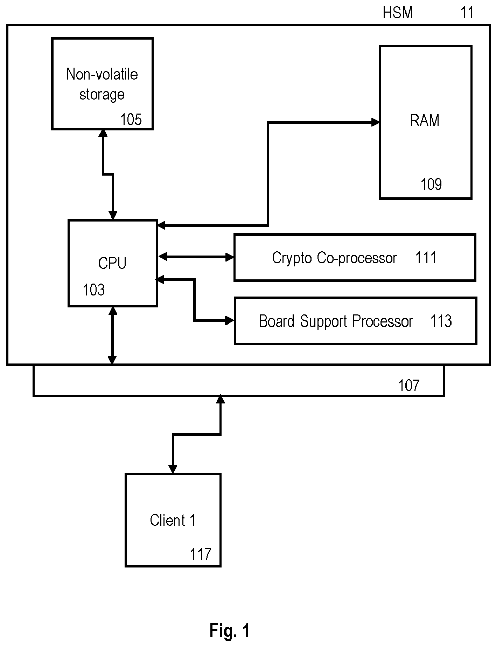

Fig. 1 is a schematic illustration of a Hardware Security Module (HSM) device 11 in accordance with an embodiment. The HSM 11 comprises a processor 103, a non-volatile memory 105 and working memory comprising Random Access Memory (RAM) 109. The non-volatile memory 105 may include any form of non-volatile device memory such as flash, optical disks or magnetic hard drives for example. The non-volatile memory 105 may be physically secure and may be resistant to tamper by a third party, for example by the inclusion of physical security such as a membrane that covers the entire device, that cannot be removed without destroying the underlying physical hardware, thus making it un-usable. The CPU 103 is in wired bi-directional communication with non-volatile storage 105 and also in wired bi-directional communication with the RAM 109.

Computer program code is stored in the non-volatile memory 105. When executed, a program is represented as a software product, or process, in the working memory 109. The processor 103 comprises logic circuitry that responds to and processes instructions in program code in the working memory 109. The below description refers to "firmware", which is a program comprising a set of computer instructions. The firmware comprises machine code stored in the non-volatile memory 105 on the HSM 11. Also stored in the non-volatile memory 105 on the HSM 11 are any components necessary to execute the firmware, including runtime system files. When executed, a copy of the firmware machine code is loaded in the working memory 109. A "firmware process" is the instance of the firmware that is being executed, comprising the machine code in the RAM 109. Execution of the firmware by the processor 103 causes methods as described herein to be implemented.

The processor 103 runs an operating system, for example a Linux operating system. The operating system comprises system software that manages the hardware and software resources of the HSM device 11, and acts as an intermediary between the firmware and the HSM hardware.

The firmware comprises computer instructions embodying a set of one or more cryptographic algorithms. For example, the firmware comprises computer instructions embodying one or more of the following cryptographic algorithms: cryptographic key generation; key derivation; encryption; decryption; and digital signature algorithms (for example digital signing or validation of a digital signature). The firmware can be embedded in the non-volatile memory 105 of the Hardware Security Module 11 when the Hardware Security Module (HSM) 11 is manufactured by a trusted party, or can be provided by the trusted party as a whole or in part after manufacture. For instance, the firmware can be introduced by the trusted party as a computer program product, which may be in the form of a download. Alternatively, modifications to existing firmware can be made by the trusted party by an update or plug-in.

In use, the HSM device 11 is generally located within a larger system. The HSM 11 is communicatively coupled to a computer or server device in the larger system through interface 107, which comprises a communication link to the computer or server device. For example, the HSM device 11 can be a PCI express card directly plugged into the computer or server device, or the HSM device 11 can be communicatively connected to the computer or server device by a USB connection. In use, the HSM device 11 receives user requests through interface 107.

In one example, the HSM 11 is located in a user system. In this case, the user system has a dedicated local HSM 11 device. The HSM 11 is directly coupled to a user computing device 117 controlled by the user through interface 107, for example the HSM device 11 can be a PCI express card directly plugged into the computing device 117 or can be communicatively connected to the computing device 117 by a USB connection. The computing device 117 may be a server or an end-user computing device for example.

In a different example, the HSM 11 is located in a host system which is separate to the user computing device 117. The host system may be a service provider system for example. In this case, the user computer 117 communicates with a computer or server device in the host system. The HSM device 11 is directly coupled to the computer or server device in the host system through interface 107. For example, the HSM device 11 can be a PCI express card directly plugged into the computer or server device in the host system, or the HSM device 11 can be communicatively connected to the computer or server device by a USB connection. The user computing device 117 is thus communicatively coupled to the HSM device 11 through the computer or server device in the host system. Communication between the user computing device 117 and the host computer or server device may be performed via an Internet connection for example.

The non-volatile data store 105 stores first information specifying the configuration of the HSM 11. This will be described in more detail below.

The non-volatile data store 105 also stores one or more cryptographic keys associated with a user. As will be described in more detail below, a master key associated with the user can be stored in the non-volatile data store 105. A master key defines a "security world" associated with the user. The HSM device 11 is enrolled in the security world when the master key is provided to the HSM device 11. The term "security world" refers to one or more security appliances (for example HSMs), or parts of a security appliance (for example a HSM partition) which share at least one private key (the master key) and are configured to safeguard cryptographic keys and perform a set of cryptographic algorithms. The master key may also be referred to as a module security world key (KMSW) key. The master key may be a symmetric key used as a root for other application keys. For example, the master key may be used to generate other application keys or to encrypt other application keys.

One or more cryptographic application keys are associated with the user for use with the cryptographic algorithms embodied in the firmware. The application key(s) may be securely stored outside of the HSM device 11 using the master key. For example, the application key(s) may be encrypted using Advanced Encryption Standard (AES) encryption (for example) using the master key (KMSW key) in the HSM device. The encrypted application key(s) can then be transmitted to a separate external device for storage. The master key however is stored on the HSM device 11.

The application keys associated with the user are used to perform one or more cryptographic algorithms embodied in the firmware. When a user request to perform an algorithm is received at the HSM, the relevant application key or keys are retrieved by the HSM, decrypted using the master key, and loaded into the RAM space of the firmware process. They may then be used by the HSM to perform one or more cryptographic algorithms, including performing various encryption and decryption algorithms, and performing digital signature algorithms.

The HSM device 11 further comprises a board support processor 113. Board support processor 113 is configured to communicate with a plurality of on-board sensors, monitoring the operation of the main CPU and the other hardware components of the Hardware Security Module 11. The sensors may include but are not limited to CPU and/or board temperature sensors, voltage and/or current sensors. The HSM device 11 further comprises a crypto co-processor 111. The crypto-coprocessor 111 may perform various standard cryptographic functions in hardware, for example various encryption and decryption algorithms, and digital signature algorithms. Various other components may be included which are not shown.

Although a HSM device has been described above, the invention is not limited to such, and the below described methods may be implemented on various devices used for performing cryptographic algorithms and/or storing cryptographic keys. For example, a software emulator running on a general purpose computing device or server may enable the computing device or server to behave like a HSM device. In this case, a computer program running in the computer device or server emulates a HSM device, and the below described methods are implemented on the computer device or server in this environment.

As discussed above, the security of a master key can be compromised when the master key is used in a HSM or other device that is not properly configured. In the embodiments described below a policy, comprising information specifying a configuration of the HSM in which the master key is permitted to be used, is used to control the use of the master key.

The user wishes to use the master key in a HSM. The master key is bound to the policy when provided to the HSM for use. For example, the master key is cryptographically bound to the policy. In some examples, the master key and policy may be bound together in a computing device in the user system. The bound master key and policy may then be sent from the user device to a host device in a service provider system, and the host device then provides them to the HSM device. In other examples, the master key is bound to the policy in a first HSM and then provided to a further HSM for use. For example, the master key is generated in a first HSM in response to a command sent from the user to the first HSM, and the master key is bound with the policy in the first HSM when it is generated. The bound master key and policy is then sent from the first HSM to the further HSM, either directly or indirectly (e.g. via a host system).

The HSM firmware when executed uses this policy to ensure that the master key is only stored, or alternatively is only used, if the HSM is properly configured, thereby preventing the use of the master key in an improperly configured HSM and reducing the likelihood that the security of the master key is compromised. Since the HSM device itself confirms that the HSM configuration is consistent with the specification in the policy, the security does not rely on the host or the security of an external system.

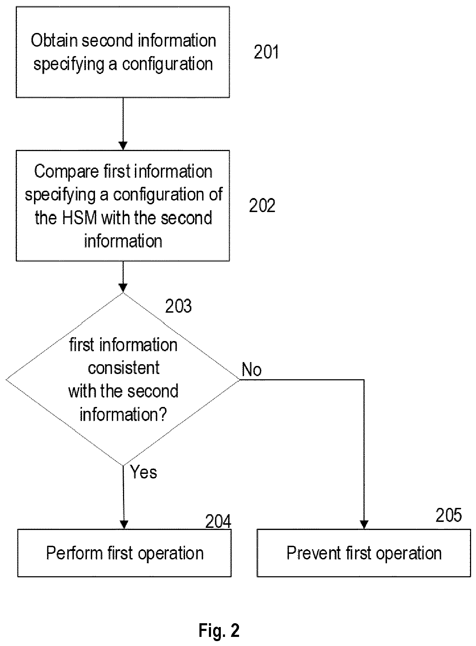

Fig. 2 shows a method of controlling the use of a first cryptographic key according to an embodiment. In this example, the method of Fig. 2 is implemented by a HSM such as has been described in relation to Fig. 1, and in particular the HSM firmware comprises machine code embodying the method steps as described in relation to Fig. 2.

In step 201, the first cryptographic key and the second information specifying a permitted HSM configuration (also referred to here as the second configuration) are obtained. The second information is provided as an access control list (ACL), which specifies a configuration of the HSM in which use of a first cryptographic key is permitted. The second information describes the policy (i.e. the requirements) associated with use of the first cryptographic key (master key). As a result, the second information is sometimes also referred to as the policy in the below description.

The Access Control List (ACL) may be represented in one of several formats. For example, the ACL may be represented using a human-readable text format. Alternatively, the ACL may be represented using a data structure that is stored in memory when, for example, the ACL is used by a computer program. Alternatively, the ACL may be represented using a byte sequence. The byte sequence may be generated from a data structure as mentioned above using a serialisation process and be capable of being de-serialised back into the same data structure.

The second information (the ACL associated with the first cryptographic key) comprises a first set of policy information, comprising configurable properties that specify the permitted HSM configuration.

Optionally, the second information (the ACL associated with the first cryptographic key) also comprises a second set of policy information, that controls the operations that can be performed on the ACL and the corresponding first cryptographic key. For example, controlling whether the ACL can be retrieved by another process and/or controlling whether the ACL associated with the first cryptographic key can be modified to be made stricter (for example, by replacing the ACL with an ACL that contains a subset of the operations that are permitted by the current ACL).

Optionally, the second information (the ACL associated with the first cryptographic key) also comprises a third set of policy information that controls the "recovery" operations that can be performed on the ACL and its corresponding first cryptographic key, provided authorisation from an administrator key (specified in the third set of policy information) has been obtained.

An example ACL, represented in human readable text format, and comprising the first set of policy information, the second set of policy information, and the third set of policy information is provided below:

| |
|---|
| ```
        ACL.groups[0].flags= 0x0
                       .limits= empty
                       .actions[0].type= OpPermissions
                                    .details.perms=
       DuplicateHandle\|ReduceACL\|GetACL
           .groups[1].flags= remotemodule_present
                       .limits= empty
                       .actions[0].type= OpPermissions
                                    .details.perms= UseAsKM
                       .remotemodule.flags= ma_present
                                       .ma.attribs[0].tag= GlobalFlags
                                                       .value.nsoflags=
       AlwaysUseStrongPrimes\|FIPSLevel3Enforcedv2
                                                               .initflags=
       UseFIPSApprovedInternalMechanisms
           .groups[2].flags= certifier_present\|FreshCerts
                       .limits= empty
                       .actions[0].type= OpPermissions
                                    .details.perms=
       GetAppData\|SetAppData\|ExpandACL
                       .actions[1].type= MakeBlob
                                    .details.flags=
       AllowKmOnly\|AllowNonKm0\|AllowNullKmToken
                       .actions[2].type= MakeArchiveBlob
                                    .details.flags= 0x0
                                              .mech= Any
                       .certifier= 0cd604cc 0b49ca43 9b09b160 6f75f2b2
       615822a9
``` |

In this example the first set of policy information is represented by "groups[1]", which in this example, permits using the key as a master key ('UseAsKM') provided that the "AlwaysUseStrongPrimes", "FIPSLevel3EnforceV2" and "UseFIPSApprovedlnternalMechanisms" configurable properties are enabled in the Hardware Security Module (HSM).

The second set of policy information is represented by "groups[0]", which in this example, permits operations such as: duplicating handles of the key, retrieving the ACL and making the ACL even stricter (i.e. replacing it with an ACL which permits only a subset of the operations which this one permits). The third set of policy information is represented by "groups[2]", which in this example, contains the permitted "recovery" operations that can be performed provided authorisation from the administrator key (identified by the certifier field) is available.

In the example described here, the first cryptographic key is a master key associated with a user, and the second information (the ACL) specifies the user's required HSM configuration - this is specified in the first set of policy information in the example ACL described above. This second configuration may be based on a user's policies on how their cryptographic keys are to be used or a user's compliance requirements under which conditions their cryptographic keys are to be used.

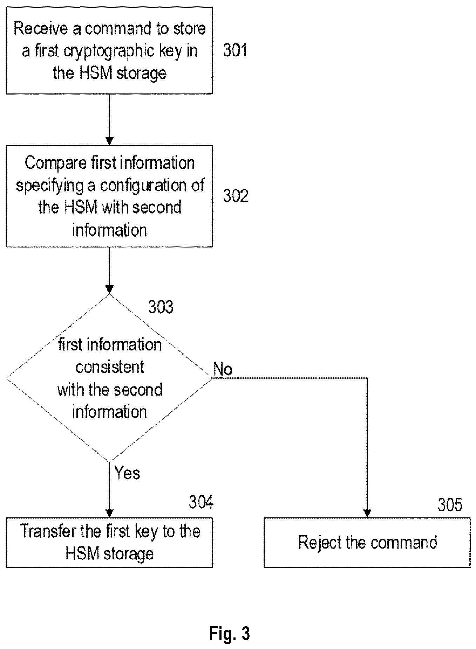

In one example, the second information is obtained in step 201 from a separate device, together with the first cryptographic key. For example, the second information is provided to the HSM device cryptographically bound to the first cryptographic key from a separate device (e.g. another Hardware Security Module (HSM)), and loaded into the working memory of the HSM device. In this example, the first cryptographic key and the second information are cryptographically bound at the separate device (e.g. the other HSM), and then transmitted to the HSM 11. An example in which the second information is obtained in this manner will be described in more detail in relation to Fig. 3 below.

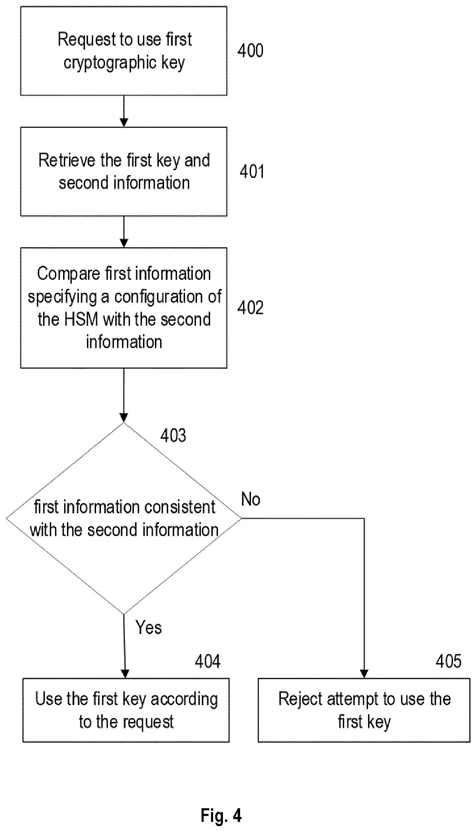

In an alternative example, the second information is obtained from the non-volatile memory 105 of the HSM device together with the first cryptographic key, and loaded into the working memory of the HSM device. The second information is stored in the non-volatile memory 105 associated with the first cryptographic key. An example in which the second information is obtained in this manner will be described in more detail in relation to Fig. 4 below.

The second information (the ACL) obtained in step 201 comprises information specifying at least one configurable property of the HSM. The configurable properties of the HSM will be discussed below in greater detail. However, the configurable properties of the HSM may include: an identity of an administrator key (i.e. a cryptographic key that is trusted to authorise administrative operations), and/or an indication of one or more cryptographic algorithms that can or cannot be executed on the HSM for example.

In step 202, the HSM compares first information specifying a current configuration of the HSM with the second information obtained in step 201.

In one example, the first information specifying a current configuration of the HSM is obtained from a configuration file stored in the non-volatile storage 105 of the HSM 11. The first information specifying the configuration of the HSM is representative of the current configuration of the HSM. As a result, the information specifying the configuration of the HSM comprises values of configurable properties that impact the current HSM operation.

In step 203, the HSM determines whether the first information specifying the configuration of the HSM is consistent with the second information obtained in step 201. In effect, step 203 comprises determining whether the first cryptographic key can be used in the HSM given its current configuration. As discussed above, the second information specifies a configuration of the HSM in which use of the first cryptographic key is permitted. Consequently, it can be determined whether the use of the first cryptographic key is permitted in the HSM.

There are various criteria which can be used to determine whether the first information specifying the configuration of the HSM is consistent with the second information, for example, an "exact match" criteria or an "at least as strict" criteria may be applied. Which criteria is used in step 203 may be predetermined for the HSM or specified in the second information (i.e. in the ACL associated with the master key). The requested configuration of the HSM and the permitted configuration bound to the master key are compared according to the criteria.

The configurable properties of the HSM will be discussed in more detail below. However, three configurable properties include: the *"AuditLogging"* property, which if present enables secure logging operation by the HSM, the *"UseFIPSApprovedInternalMechanisms",* which enables a specific compliance mode of the HSM, and *"FirmwareVersionNumber"which* indicates the version number of the HSM firmware. These properties will be used as examples here to illustrate how the different criteria may be applied.

In a first example, determining whether the first information and the second information are consistent comprises: determining whether a configurable property specified in the second information (the ACL) is present in the first information specifying a current configuration of the HSM; and, if there is a value associated with the configurable property, determining whether the value of the configurable property in the second information matches (i.e. is the same as) the value of the configurable property in the first information specifying a configuration of the HSM. This is referred to as the *"exact match"* criteria.

In an illustrative example of the *"exact match"* criteria, the second information (the ACL) comprises the *"AuditLogging"* property. In this case a user enforces that the first cryptographic key can only be used as a master key in a HSM in which secure logging is enabled. The second information also includes a firmware version number property with an associated value of "4" (in this example). In this case a user enforces that the first cryptographic key (associated with the second information) can only be used as a master key in HSMs that use firmware version 4.

In a first instance, the HSM (on which the method of Fig. 2 is being executed) is configured with secure logging enabled and is configured to use firmware version "4". As a result, the first information specifying a current configuration of the HSM comprises the *"AuditLogging"* property, and a value associated with the firmware version of "4".

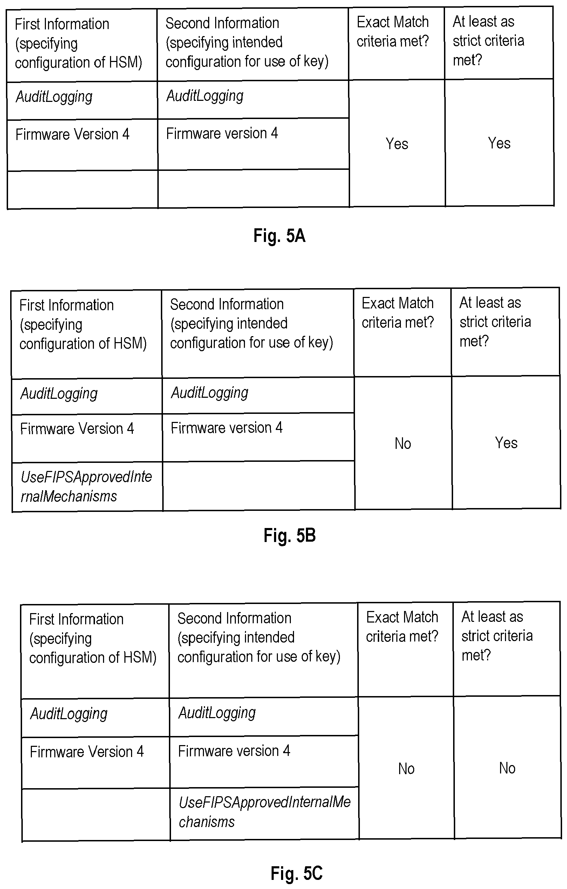

Applying the *"exact match"* criteria in step 203 it is determined that the first information specifying the current configuration of the HSM is consistent with the second information (i.e. the ACL associated with the master key) because the first information specifying a current configuration of the HSM contains only those properties contained within the second information (i.e. the ACL associated with the master key) and has the same values as the those specified in the second information. An example of this is shown in Fig. 5A.

If the first information (specifying a current configuration of the HSM) contains a configurable property not listed in the second information (i.e. in the ACL associated with the master key), then the *"exact match"* criteria will fail (i.e. there is not a match and the policies are not consistent), since the first information does not exactly match the second information, i.e., the first information does not specify only those properties in the second information. An example of this is shown in Fig. 5B, where the first information (indicating a current configuration of the HSM) comprises the *"UseFIPSApprovedInternalMechanisms"* property, whereas the second information does not.

If, on the other hand, the second information (i.e. in the ACL associated with the master key) contains a property that is not present in the first information (specifying a current configuration of the HSM), then the *"exact match"* criteria will also fail (i.e. the policies are not consistent) since the first information does not exactly match the second information (by virtue of the second information having a property not included in the first information). An example of this is shown in Fig. 5C.

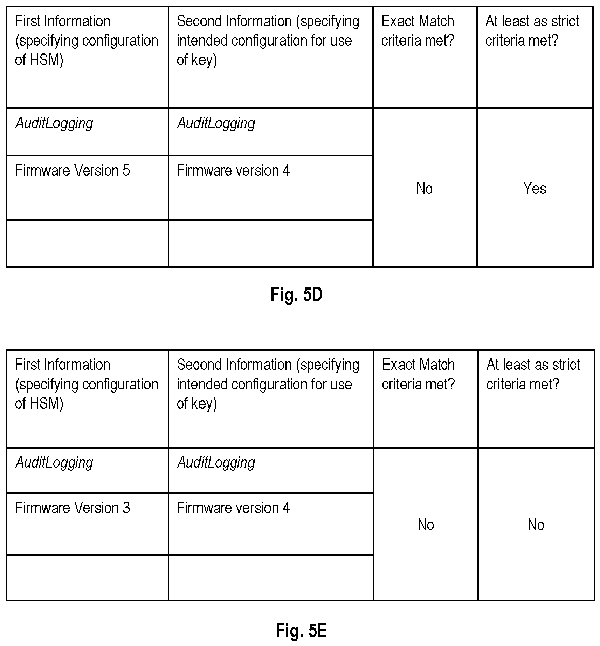

In another example, the second information (i.e. the ACL associated with the master key) contains a firmware version number of "4" and the first information indicating a current configuration of the HSM indicates that a firmware number of 5 is being used by the HSM. In this case the *"exact match"* criteria is not met since the value of the firmware version in the first information does not exactly match (i.e. have the same value as) the firmware number in the second information. An example of this is shown in Fig. 5D, where the firmware version number required for use of the master key is "4", whereas the firmware version number being operated by the HSM is "5".

An example of this is also shown in Fig. 5E, where the firmware number of the HSM is "3", whereas the firmware number required for use of the master key is "4". In both these cases the firmware number in the second information (i.e. the ACL associated with the master key) does not exactly match the first information indicating a current configuration of the HSM, as a result, the first information is not consistent with the second information applying the *"exact match"* criteria.

In a second example, an *"at least* as *strict"* criteria is used to determine whether the first information is consistent with the second information. When applying the *"at least* as *strict"* criteria it is determined whether the first information (i.e. the configuration of the HSM) contains at least those configurable properties present in the second information (i.e. the ACL associated with the master key) and where the configurable property has a value, the first information contains a value of the configurable property that satisfies the value of the configurable property in the second information - for example is equal to or greater than the value of the configurable property in the second information.

For properties that are simply present or absent in the configuration information, the 'at least as strict' criteria means that if a property is present in the second information but absent in the first information, then the first information and the second information is not consistent. Otherwise the first information and the second information are consistent, as illustrated in the following truth table:

| **First information** | **Second information** | **Outcome** |
|---|---|---|
| Absent | Absent | Accept |
| Absent | Present | Reject |
| Present | Absent | Accept |
| Present | Present | Accept |

Other properties may have a numeric value. In this case the 'at least as strict' rule is that if the value in the first information (in the HSM) satisfies the value in the second information, the first information and the second information is consistent. Otherwise the first information and the second information are not consistent. For example, in many cases, the value in the first information satisfies the value in the second information if the value in the first information is greater than or equal to the value in the second information (bound to the key). An example of such a property is firmware version number. For example, a master key may specify a firmware version number in the policy, enforcing that it could only be used on HSMs running firmware versions above a certain level. This could be used if firmware versions below a certain level are known to contain a vulnerability for example.

Examples of applying the *"at least* as *strict"* criteria are shown in Fig. 5A - 5E. As discussed above, Fig. 5A shows an example where the first information (specifying the configuration of the HSM) contains the same configurable properties, with the same values, as the second information (i.e. the ACL associated with the first cryptographic key, specifying the permitted configuration for use of the first cryptographic key). In this case the *"at least* as *strict"* criteria is satisfied because the first information contains at least those configurable properties in the second information and the first information contains a value (i.e. firmware version 4) that is equal to the value in the second information (i.e. firmware value 4), thereby passing the requirement for the value in the first information to be equal to or greater than the value in the second information.

Consequently, when applying the *"at least as strict"* criteria in Fig. 5A, the first information is found to be consistent with the second information.

In Fig. 5B the first information is found to be consistent with the second information when applying the *"at least* as *strict"* criteria. In Fig. 5B, the first information contains at least those configurable properties specified in the second information (i.e. the first information contains at least *"AuditLogging"* and Firmware Version 4). Consequently, the first information (i.e. the configuration of the HSM) is at least as strict as the second information (specifying the permitted configuration for use of the first cryptographic key). It is noted that in the example of Fig. 5B, the first information is stricter than the second information, in the sense that the first information contains more configurable properties, and so is stricter because it places more limitations on the operation of the HSM.

In Fig. 5C the first information is not consistent with the second information when applying the *"at least* as *strict"* criteria. In the example of Fig. 5C the second information includes one configurable property (*"UseFIPSApprovedInternalMechanisms"*) that is not included in the first information. As a result, the first information is not *"at least* as *strict"* as the second information because the first information does not include at least the configurable properties present in the second information. In the example of Fig. 5C, the first information is "less strict" than the second information because the first information does not put as many constraints on the configurable properties as the second information (associated with the master key) does.

Fig. 5D shows a fourth example. In Fig. 5D the second information is consistent with the first information applying the *"at least* as *strict"* criteria. As discussed above, for the first information to be *"at least* as *strict"* as the second information, the first information must include at least the configurable properties included in the second information, and where a configurable property has a value associated with it, the first information must include a value equal to or greater than the respective value in the second information. In the example of Fig. 5D, the firmware version number in the first information (i.e. currently being implemented by the HSM) is "5", whereas the firmware version number in the second information is "4". In this case the first information is *"at least* as *strict"* as the second information because the value of the firmware number in the first information is greater than the firmware number in the second information.

Fig. 5E shows a fifth example. In Fig. 5E the second information is not consistent with the first information applying the *"at least* as *strict"* criteria. In Fig. 5E the second information (i.e. the ACL associated with the cryptographic key) specifies a firmware version of "4", whereas the first information (indicating the current configuration of the HSM) specifies a firmware version of "3". In this case the value of the firmware version number is less than the value in the second configuration. As a result, the first information is not *"at least* as *strict"* as the second information.

Described above are two criteria that can be used for determining whether the first information is consistent with the second information. When using the *"exact match"* criteria the first information is consistent with the second information if the first information contains only those configurable properties specified in the second information, and where a configurable property is associated with a numerical value, the numerical value in the first information is the same as the numerical value in the second information. When using the *"at least* as *strict"* criteria the first information is consistent with the second information if the configurable properties specified in the first information include at least the properties specified in the second information, and where a configurable property in the second information contains a value, the value in the first information is numerically equal to or greater than the value in the second information.

Returning to Fig. 2, if it is determined in step 203 that the first information specifying the configuration of the HSM is consistent with the second information specifying a configuration of the HSM in which use of the first cryptographic key is permitted, then the method proceeds to step 204 where a first operation using the first cryptographic key is performed.

The first operation may comprise storing the first cryptographic key in persistent storage in the HSM, i.e. in non-volatile storage 105.

Alternatively, the first operation may comprise using the first cryptographic key to perform a cryptographic operation, such as encrypting or decrypting an application key. For example, the method of Fig. 2 may be performed in response to receiving a request to use an application key encrypted by the first cryptographic key. In this case, S204 comprises using the first cryptographic key in accordance with the request, i.e. permitting the first cryptographic key to be used to decrypt the application key during the execution of the request.

If it is determined in step 203 that the first information specifying the configuration of the HSM is not consistent with the second information specifying a configuration of the HSM in which use of the cryptographic key is permitted, then the method proceeds to step 205 where the first operation is rejected.

As mentioned above, the first operation may comprise use of, or storage of, the first cryptographic key. In 205, use of or storage of the first cryptographic key is prevented, since the requirements for use of or storage of the first cryptographic key (as specified in the second information, also referred to as the policy) have not been met by the configuration of the HSM. Preventing the first operation may involve not storing the first cryptographic key in persistent storage, or where the method of Fig. 2 was performed in response to receiving a request to use the first cryptographic key, rejecting the request and not performing the request.

The HSM configuration settings are established as part of an initialisation process. An example method of establishing the HSM configuration settings will now be described. The HSM configuration settings which are established may be those requested by the same user wishing to use their master key on the HSM device. For example, the requested HSM configuration settings and the master key may both be provided as part of an initialisation process. In alternative examples however, a separate party may establish the HSM configuration settings as part of an initialisation process, and the user master key is then provided separately. In the below example, a first party is referred to, which may be the user, a different user, a different HSM, or a different party (for example a service provider).

In this example, a secure channel is established between the party and the HSM. The HSM is then configured according to an intended configuration by sending a command to the HSM comprising the requested configuration, over the secure channel. In response to receiving the command the HSM configures itself according to the intended configuration and stores first information specifying the configuration. In this example, the HSM supports a plurality of commands that can control the functionality of the HSM. In an example, the commands supported by the HSM include, but are not limited to, the commands described in Appendix A. In particular, a "Cmd_InitialiseUnitEx" command and a "Cmd_SetNSOPerms" as described in Appendix A are sent to the HSM. Fig. 3 shows a method of controlling the use of a cryptographic key according to an embodiment.

The method of Fig. 3 controls whether the cryptographic key is stored by the HSM in persistent storage such as non-volatile memory 105, for future use. In Fig. 3 the first cryptographic key will only be transferred to the persistent storage of the HSM if the configuration of the HSM is consistent with the requirements imposed by the second information (otherwise known as the policy) which indicates a configuration of the HSM in which use of the first cryptographic key is permitted. If the first cryptographic key is not stored by the HSM, then future operations that require the first cryptographic key cannot be completed. Consequently, the approach shown in Fig. 3 provides a method of ensuring that the first cryptographic key is only deployed for future use to a HSM that has a configuration that is consistent with the first cryptographic key's use policy. In effect, preventing future use of the cryptographic key unless the HSM is in a proper configuration. The method described in relation to Fig. 3 is performed when a new user wishes to enrol their master key with the hardware security module. This may happen when the HSM configuration settings are established, or some time after this, for example when a new user wishes to enrol their master key with an HSM which is already being used for existing users.

In this example, the process of configuring the HSM according to an intended configuration is treated as a distinct step from loading the master key. In other examples however, the first cryptographic key and the second information are provided in the command establishing the HSM configuration settings.

In this example, once initialised, the HSM configuration cannot be changed without proper authorisation. This might require presentation of an administrator key for example.

In this example, the user master key (first cryptographic key) is stored in a first HSM device. The user master key is to be used in a second HSM device. This situation may arise where there are several HSM devices associated with the user (for example in a service provider system or in a tenant system). A first HSM device may generate the user master key as part of an initialisation process. The first HSM then provides the user master key to one or more other HSM devices associated with the user. In this example, the first cryptographic key (user master key) is generated on the first HSM device, and bound to the second information on the first HSM device. For example, the user may provide the second information to the first HSM over a secure channel. The first HSM then generates the master key and binds the master key to the second information, before providing the bound user master key and second information to the second HSM. In other examples, the master key and second information may be bound at a user device, and provided to the HSM from the user device.

In step 301 the second HSM receives a command to store the first cryptographic key in persistent storage such as non-volatile storage 105 of the second HSM. The first cryptographic key is a master key. The command comprises the first cryptographic key in encrypted form. The command further comprises the second information. The second information specifies the permitted configuration of the HSM. The first cryptographic key and the second information are bound together before being provided to the second HSM.

As described above, in this example, the first cryptographic key and the second information are bound in a first HSM device, and provided to a second HSM device. In this example, a secure channel is established between the first HSM and the second HSM, for the purpose of communicating the first cryptographic key and the associated policy (second information) from the first HSM to the second HSM. In an example, the secure communication channel is established using Transport Layer Security (TLS). In an example, The Transport Layer Security (TLS) Protocol Version 1.3 as described in the Internet Engineering Task Force (IETF) Request for Comments: 8846, which is incorporated herein by reference, is used to establish the secure communications channel. In other examples, different protocols for establishing a secure communication channel are used. In an example, the authenticity of the endpoints (i.e. the HSMs) is verified using signing keys permanently embedded in the HSMs and certified during production by a certificate authority operated by the device vendor. Optionally, the certificates may use X.509 format, or any other suitable format.

In this example, the first cryptographic key is cryptographically bound to the second information at the first HSM. In this example, the first cryptographic key is cryptographically bound to the second information using a communication key (also referred to as a session key) associated with the secure channel. In this example, the first cryptographic key and the second information are combined to form a key blob, and the key blob is subsequently encrypted using the communication key and communicated to the HSM. In this example, cryptographically binding the first cryptographic key to the second information comprises obtaining the first cryptographic key and the second information (e.g. a byte code representation of the second information) on the first HSM, concatenating the first cryptographic key and the second information and encrypting the result under the communication key.

In this example, the first HSM transfers the encrypted key blob comprising the first cryptographic key and the second information to the second HSM using a send key command and then the second HSM receives a command to store the first cryptographic key in the second HSM persistent storage. For example, the second HSM receives a "Cmd_SendKey" command containing the first cryptographic key and the second information, before receiving a "Cmd_SetKM" command as described in Appendix A to set the first cryptographic key as a master key on the second HSM and store the key in the second HSM persistent storage.

The command, comprising the encrypted key blob comprising the first cryptographic key and the second information is sent from the first HSM to the second HSM device 11. The command to store the first cryptographic key is received by the second HSM device 11 and loaded into working memory of the second HSM device 11. The second HSM device 11 decrypts the key blob to obtain the first cryptographic key and the second information, using the communication key associated with the secure channel that exists for the duration of the secure channel. The HSM that receives a cryptographically bound master key and policy subsequently de-crypts the blob (i.e. breaking the binding) into the two separate components (i.e. the master key and the policy).

Optionally, there is also provided a digital signature generated based on the first cryptographic key and the second information. In this case, the digital signature is provided at the same time as the key blob, so that the second HSM can establish the origin of the key blob. In this case, the key blob is signed with a private key. The command then comprises this signature information, in addition to the encrypted key blob. On receipt of the command, the second HSM device 11 verifies the signature using a public key.

In response to loading the first cryptographic key and the second information into the working memory of the second HSM, the second HSM transmits a response to the user containing an identifier of the first cryptographic key (e.g. a key handle). The user subsequently transmits a request to the second HSM for the first cryptographic key to be stored in the persistent storage of the second HSM and to be used as a master key. In an example, the command comprises the identifier of the first cryptographic key.

In response to receiving the command to store the first cryptographic key in persistent storage, the HSM proceeds to step 302. In step 302 the HSM compares first information specifying a configuration of the HSM (i.e. the HSM's current configuration, also referred to as a first configuration) with the second information received in the command. Step 302 is the same as step 202 discussed above.

In step 303 the HSM determines whether the first information specifying the configuration of the HSM is consistent with the second information. When determining whether the first information is consistent with the second information, either of the *"exact match"* or *"at least as strict"* criteria is used as discussed in relation to Fig. 5A - 5E. Optionally, the criteria to use when determining whether the ACL's are consistent is specified in the second information (i.e. within the ACL bound to the cryptographic key). Step 303 is the same as step 202 as discussed above.

If it is determined in step 303 that the first information specifying the configuration of the HSM is consistent with the second information, then the method proceeds to step 304, where the HSM transfers the first cryptographic key to the persistent storage of the HSM, thereby providing the HSM with the first cryptographic key that can be used by the HSM in the future. Optionally the HSM also transfers the second information to persistent storage.

If it is determined in step 303 that the first information specifying the configuration of the HSM is not consistent with the second information, the method proceeds to step 305 where the command to transfer the first cryptographic key is rejected, thereby preventing the first cryptographic key from being stored in the HSM. A message may be transmitted to the user device indicating that the HSM does not meet the permitted configuration. The message may comprise information detailing how the HSM does not meet the permitted configuration for example.

Once the first cryptographic key is stored in the non-volatile storage, the first cryptographic key can be used in various cryptographic operations embodied in the firmware of the HSM. For example, a first application key also associated with the same user is stored in an encrypted manner in an external storage device connected to the HSM. The encrypted first application key is encrypted with the first cryptographic key (master key). The user may wish to use the first application key to decrypt some encrypted data. The user generates a command at the user computing device. The command comprises an identifier of the user, an identifier of the operation to be performed (a decryption operation in this case), an identifier of the first application key and the encrypted data to be decrypted. This command is sent to the HSM device 21. Computer program code in the firmware on the HSM device 21 is identified by the received command and executed. The HSM retrieves the first cryptographic key from persistent storage. The first cryptographic key may be identified by the identifier of the user included in the received command, or alternatively the command may comprise an identifier of the first cryptographic key. The encrypted first application key is also retrieved from the external storage device. The HSM decrypts the encrypted first application key using the first cryptographic key (master key). The decryption operation specified in the received command may then be performed using the first application key.

The first application key may also have an associated access control list comprising one or more policies which specify how the first application key is permitted to be used. For example, a policy associated with the first application key may specify that it is not permitted to be used for a signing operation. The policy associated with the first application key is checked to confirm that the decryption operation specified in the received command is permitted for the first application key. The first application key is stored in an encrypted fashion on an external storage device, with the access control list cryptographically bound to the first application key. Once retrieved by the HSM, the decrypted first application key and the access control list are stored together in the working memory of the HSM. The HSM firmware comprises a step of checking an access control list associated with an application key before using the application key. The HSM checks the access control list of the first application key before using the first application key for the decryption operation.

The method of Fig. 3 can be used when a first cryptographic key, the master key, is transferred to the HSM 11, for example as part of an initialisation process as described above. The method of Fig. 3 in this case has the effect of preventing the initialisation process from completing unless the HSM is in a proper configuration for the first cryptographic key. In particular, the policy prevents the master key from being transferred to persistent storage of the HSM unless the HSM is in a proper configuration. In other words the policy contains a description of the required configuration, as chosen by the user when the master key is created. When the HSM receives a command to transfer the master key to its persistent storage, it compares the configuration in the policy with its own current configuration, and rejects the command if they are not consistent. The initialisation process in this example cannot complete unless the HSM is in the proper configuration for the master key.

Although in the above described example, the master key and the second information are bound together by combining and then encrypting with a key associated with the secure channel, in other examples other keys may be used. Optionally, the key is stored on a smart card and loaded onto the HSM by a user. In an example, a plurality of HSM's associated with a user each have access to the communication key (e.g. by virtue of storing the communication key on the HSM).

Although in the above described example, the master key and the second information are bound together by combining and then encrypting with a single key, other mechanisms for binding the master key to the second information may be used. For example, the master key may be cryptographically bound to the policy by concatenating information identifying the master key with information identifying the policy and encrypting the result using a cryptographic key (e.g. a "communication" key) that can be accessed by the HSM. The master key and policy may then be provided separately. For example, the second information may be cryptographically bound to the first cryptographic key by means of a cryptographic integrity check covering the key and the second information. For example, the second information and the first cryptographic key are concatenated and this concatenated data is taken as input to a cryptographic hash function. The output of this hash function is then signed with a private key at the first HSM. The command to transfer the key and the second information then comprises this signed output of the hash function and the output of the hash function, in addition to the second information and the encrypted first cryptographic key.

The first cryptographic key is communicated to the HSM in an encrypted form. In some examples, the second information is unencrypted. As discussed above, the second information comprises the configuration of a HSM, in which use of the associated cryptographic key is permitted. This information is not generally sensitive. As a result, the second information can be communicated unencrypted. In an example where the command comprises an encrypted first cryptographic key and an unencrypted second information, the first cryptographic key only is decrypted (e.g. using the communication key, which is accessible to the HSM). Binding information is additionally provided - for example a signed output of a hash function and the output of the hash function.

In this example, a cryptographic key and its associated policy is transmitted from the first HSM to the second HSM over the secure channel. With this approach, once the first HSM has been fully initialised, it can be used to securely initialise the second HSM without having to use other means (e.g. smartcards) to decrypt the master key and its associated policy and without having to trust any external host to set the correct policy.

In other examples, the first cryptographic key and its associated policy are transferred to the HSM in other ways. For example, by being loaded directly onto the HSM using a smart card or being transferred to the HSM over a different communication channel. In an example the first cryptographic key and the associated policy are transferred to the HSM from a device other than a HSM (e.g. from a user computing device 117) using a load blob command (e.g. a "Cmd_LoadBlob" command as described in Appendix A) containing an encrypted key blob. The encrypted key blob is formed by concatenating the first cryptographic key with the second information and encrypting the result using a cryptographic key known to the HSM (and optionally provided to the HSM during initialisation). In response to receiving the load blob command, the HSM de-crypts the blob using the cryptographic key known to the HSM, thereby obtaining the two separate components (i.e. the first cryptographic key and the policy) and stores the components in working memory. The HSM transmits a response to the user comprising an identifier of the first cryptographic key (e.g. a key handle). The user subsequently transmits a "Cmd_SetKM" command to the HSM that contains the identifier as described in Appendix A to set the first cryptographic key as the master key on the HSM and to store the key in the HSM's persistent storage. The HSM proceeds to step 302 in response to receiving the "Cmd_SetKM" command as discussed above in relation to the example where the first cryptographic key and the associated policy is received from another HSM.

As discussed above, the method of Fig. 2 can also be used to control the use of a first cryptographic key that has already been deployed to the HSM, i.e. where the cryptographic key is already stored in the persistent storage.

The process of configuring the HSM according to an intended configuration is performed in the same manner as has been described previously. The first cryptographic key and the second information may be provided to the HSM at the same time, or at a later point. The method of Fig. 4 is then performed each time the first cryptographic key is to be used.

Fig. 4 shows a method of controlling the use of a cryptographic key according to an embodiment. In the method of Fig. 4, the cryptographic key and second information specifying a configuration of the HSM in which use of the first cryptographic key is permitted are stored by the HSM in persistent storage, such as the non-volatile storage. The second information is stored in the non-volatile memory 105 associated with the first cryptographic key. The second information and the first cryptographic key are stored with some link between the two, such that they are written together and returned together when read. In a first example the second information is stored in an adjacent memory location to the first cryptographic key. In another example, the second information is stored in a memory location that is a fixed offset from the memory location in which a first part of the first cryptographic key is stored. In yet another example, there is provided a file system that enables the first cryptographic key and second information (i.e. the ACL) to be obtained by reference to their respective filenames using file input/output operations.

In Fig. 4, a check is performed each time the first cryptographic key is to be used (e.g. retrieved from the HSM long term storage), to ensure that the first cryptographic key is only used in an HSM that is in an appropriate configuration.

In step 400 the HSM receives a request to use a first cryptographic key in a first operation. For example, the first cryptographic key is a master key associated with a first user. A first application key also associated with the first user is stored in an encrypted manner in an external storage device connected to the HSM. The encrypted first application key is encrypted with the first cryptographic key (master key). The user wishes to use the first application key to decrypt some encrypted data. The user generates a command at the user device. The command comprises an identifier of the user, an identifier of the operation to be performed (a decryption operation in this case), an identifier of the first application key and the encrypted data to be decrypted. This command is sent to the HSM device 21. This command corresponds to a request to use the first cryptographic key. In this case, the request to use the first cryptographic key comprises a request to use the first application key, since the first application key is encrypted by the first cryptographic key. The first operation in this case is decryption of the first application key.

Computer program code in the firmware on the HSM device 21 is identified by the received command and executed. This code embodies the following steps.

In step 401 the HSM retrieves the first cryptographic key and the second information from persistent storage. The first cryptographic key may be identified by the identifier of the user included in the received command, or alternatively the command may comprise an identifier of the first cryptographic key.

In step 402 the HSM compares first information specifying the configuration of the HSM (i.e. the HSM's current configuration) with the second information.

In step 403 the HSM determines whether the first information specifying the configuration of the HSM is consistent with the second information. In the embodiment of Fig. 4, the use policy for the cryptographic key (i.e. the second information) is compared against the current HSM configuration. The configurations are therefore compared each time that use of the cryptographic key is requested. Step 403 is implemented in the same way as step 203 as discussed above.

If, in step 403, it is determined that the first information specifying the configuration of the HSM is consistent with the second information, then the method proceeds to step 404 where the cryptographic key is used according to the request received in step 400 - in other words the first operation is performed. In this example, the first operation comprises retrieving the encrypted first application key from the external storage device, and decrypting the encrypted first application key using the first cryptographic key (master key). The decryption operation specified in the received command may then be performed using the first application key. The first application key may also have an associated policy which specifies how the first application key is permitted to be used, as has been described previously. The policy associated with the first application key is also checked to confirm that the decryption operation specified in the received command is permitted for the first application key.

If it is determined in step 403 that the first information specifying the configuration of the HSM is not consistent with the second information then the method proceeds to step 405, where the attempt to use the first cryptographic key is rejected. The first operation is not performed - in this example the first application key is not decrypted using the first cryptographic key. A message may be sent to the user device indicating that the HSM does not meet the permitted configuration. The message may comprise information detailing how the HSM does not meet the permitted configuration for example.

In the method described in relation to Fig. 4, the HSM permits the master key to be transferred to persistent storage (without checking the policy), but prevents use of the master key from persistent storage unless the HSM is in the proper configuration. In this case both the master key and the policy can both be transferred to persistent storage during initialisation. The policy is then checked against the current configuration every time the master key is used in any way. If the policy and the current configuration are not consistent then the attempt to use the master key is rejected. Although the initialisation process can be completed, the HSM cannot be effectively used unless it is in the proper configuration for the master key.

The method of Fig. 4 is performed each time use of the first cryptographic key is requested. The first cryptographic key may be provided to the HSM initially in the manner as described in relation to Fig. 3 for example.

Alternatively, the first cryptographic key may be provided to the HSM initially in a different manner. For example, the first cryptographic key may be stored in persistent storage on the HSM regardless of the HSM configuration, with no checks of the configuration being performed when the key is loaded onto the HSM. However, the first cryptographic key cannot be used unless the HSM is in the proper configuration, since requests to use the first cryptographic key will be rejected if the HSM is in an improper configuration.

The method of Fig. 3 provides a method of controlling the use of a first cryptographic key by controlling the initialisation process, in particular, whether the first cryptographic key can be stored in the HSM. This in turn controls whether the cryptographic key can be used for future operations. In contrast the method of Fig. 4 provides a method of controlling the use of the first cryptographic key where the first cryptographic key is already stored on the HSM (e.g. where the first cryptographic key was previously stored on the HSM as part of an initialisation process).

In the examples above, there is provided second information (e.g. an Access Control List) associated with the first cryptographic key. As discussed above, the second information specifies a configuration of the HSM in which use of the first cryptographic key is permitted. The second information is bound to the first cryptographic key when provided to the HSM. The HSM is configured such that it cannot change the second information provided with the first cryptographic key other than as is permitted by the second information. The second information therefore cannot be changed by a third party during transfer. Furthermore, the second information can only be changed by the HSM as permitted by the second information - for example, the second information may specify that a new ACL can only be used to replace the second information when the new information (i.e. the new ACL) is stricter than the second information.

The *"at least* as *strict"* and the *"exact match"* criteria were discussed above in relation to Fig. 5A - 5E. Techniques to determine whether the first information specifying the configuration of the HSM is consistent with second information (i.e. the policy bound to the cryptographic key) will now be discussed in further detail.

In one example, the second information specifies the identity of an administrator key.

The administrator key is a cryptographic key that is required to authorise one or more administrator operations on the HSM device. The HSM device stores information identifying an administrator key. The identity of the administrator key may comprise the output of a cryptographic hash function of the administrator key value for example.

The HSM firmware requires presentation of the administrator key identified in this stored information in order to perform one or more administrator operations. If the user wishes an administrator operation to be performed, the user sends a command to the HSM to perform the operation and provides the administrator key to the HSM in order to authorise the performance of the operation. The user may present various smart cards, on which the administrator key is stored for example, and optionally input a passcode, validating the use of the smart card. The admin key associated with the user may be divided onto two or more smart cards, and in order to authorise the requested admin operation, more than one of the two or more user smart cards need to be presented to the HSM.

Where the second information specifies the identity of an administrator key, the performance of steps 202 and 203 (or 302 and 303, or 402 and 403) described above checks whether the administrator key identified in the first information stored in the HSM device is the same as the administrator key specified in the second information. In this way, the user can ensure that administrator operations can only be performed by the user - the administrator key being a "per user" key associated with the user. The user holds the administrator key, for example stored on two or more smart cards, and the HSM stores information identifying the administrator key. The administrator operations may include one or more of: recovering an application key, overriding a policy of the HSM, and enabling access to features of the HSM for example. In an example, some functionality of the HSM may require authorisation by an administrator key. For example, the HSM may require authorisation from the administrator key in order to perform key generation algorithms. Optionally, the HSM also requires authorisation from the administrator key to perform certain cryptographic operations (e.g. specific RSA mechanisms) when operating in a specific compliance mode.

The information identifying the administrator key may comprise a cryptographic hash of the administrator key for example. In other words, the information identifying the administrator key comprises the output value of a cryptographic hash function for which the input was the administrator key. This information is provided to the HSM when the HSM configuration settings are established. For example, the "Cmd_SetNSOPerms" command comprises a parameter "HKNSO", which is the identity of the administrator key.

In another example, the second information specifies one or more enabled or disabled cryptographic algorithms. The second information may specify the one or more enabled or disabled cryptographic algorithms in addition to the identity of an administrator key for example, or alternatively to the identity of an administrator key. The cryptographic algorithms may include key generation, encryption, decryption, signing and/or signature verification based on one or more of: RSA, Diffie Helman or AES for example.

Optionally, the enabled/disabled cryptographic algorithms are represented using a bit string, where each bit position is associated with a different cryptographic algorithm and the value of each bit position indicates whether use of the cryptographic algorithm is enabled (1) or disabled (0).

In an illustrative example the configurable properties specified by the first information (specifying the current configuration of the HSM) include: an identity of the administrator key, and an indication of one or more enabled cryptographic algorithms. The configurable properties included in the second information specifying the second configuration include: an identity of the administrator key.

A first technique to determine whether the first information specifying the configuration of the HSM is consistent with the second information specifying the second configuration (i.e. the configuration specified in the policy bound to the first cryptographic key, identifying a second configuration of the HSM in which use of the cryptographic key is permitted) is referred to as *"exact match".* The *"exact match"* criteria is discussed in detail above in relation to Fig. 5A - 5E. However, in brief, when the "exact match" criteria is used, determining whether the first information specifying the configuration of the HSM is consistent with the policy bound to the first cryptographic key comprises determining whether the first information specifying the configuration of the HSM *only* specifies each of the configurable properties specified in the second information specifying the second configuration. That is to say, the first information specifying the configuration of the HSM consists of configurable properties specified in the second information (i.e. the policy associated with the cryptographic key). The HSM further determines whether the value of each configurable property in the second information specifying the second configuration matches (i.e. is equal to) the value of the corresponding property (i.e. the same configurable property) in the first information specifying the configuration of the HSM.

In the example above, the policy bound to the first cryptographic key (i.e. the second information) only constrains the identity of the administrator key, whereas the configuration of the HSM constrains the identity of the administrator key and the disabled cryptographic algorithms. As a result the *"exact match"* criteria is not fulfilled because the policy bound to the cryptographic key does not contain a value for each configurable property of the HSM. Specifically, the policy bound to the cryptographic key (i.e. the second information) does not include an indication of the enabled cryptographic algorithms that can be performed by the HSM. In this case the first information specifying the configuration of the HSM is determined not to be consistent with the second information specifying the second configuration (i.e. the policy bound to the cryptographic key).

In a further illustrative example in which the second information (the policy bound to the first cryptographic key) comprises information specifying a first set of cryptographic algorithms that should be enabled, the first technique comprises determining whether the first information specifies the same first set of cryptographic algorithms as being enabled.

As discussed above, another criteria that can be used to determine whether the first information specifying the configuration of the HSM is consistent with the second information specifying the second configuration is the *"at least* as *strict"* criteria. When the *"at least* as *strict"* criteria is implemented in the HSM firmware, the HSM is configured to determine whether the first information specifying a configuration of the HSM comprises a value for each configurable property specified in the policy bound to the first cryptographic key. The HSM further determines whether the value of each configurable property in the first information is equal to or greater than the corresponding value in the second information.

In the illustrative example above, the policy bound to the first cryptographic key (i.e. the second information) only constrains the identity of the administrator key, whereas the configuration of the HSM constrains the identity of the administrator key and the disabled cryptographic algorithms. In this example, the identity of the administrator key specified in the first information matches (i.e. is equal to) the identity of the administrator key specified in the policy associated with the first cryptographic key. Consequently the policy associated with the first cryptographic key (i.e. the second information specifying a second configuration) is determined to be consistent with the first information specifying the configuration of the HSM. As a result, use of the first cryptographic key is permitted (e.g. by transferring the first cryptographic key to the HSM long-term storage 304 or by using the first cryptographic key according to the request 404). Since the first information specifying the configuration of the HSM comprises an entry for the identity of the administrator key, the "at least as strict" criteria is fulfilled. In this case the configuration of the HSM is stricter than the policy required for using the first cryptographic key because the configuration of the HSM further constrains the disabled algorithms.

In an example, the configurable properties that can be specified in the first information (i.e. the information indicating the current configuration of the HSM) and the second information (i.e. the ACL associated with the first cryptographic key) include properties associated with at least one of:
- An enabled functionality of the HSM
- An identity of a cryptographic key
- An operation that can be performed to the master key
- A compliance mode of the HSM
- Enabled/disabled cryptographic algorithms
- Input/Output settings of the HSM
- Attributes of the HSM
- Limits on the performance of the HSM.
- Limits on the communication channels that the HSM uses and the parties that the HSM interacts with.
- Usage limit on the number of operations that can be performed by the HSM.
- Whether the HSM is in a specific mode. For example, the HSM can be configured to be in admin mode by the position of a physical switch accessible to a user of the HSM. In this case the configuration comprises an indication of the position of the physical switch.

In an example, configurable properties associated with an enabled functionality of the HSM include properties that indicate the HSM is configured to:
- Enable key generation without authorisation
- Allow data files to be created in the HSMs non-volatile memory
- Allow data files to be removed from the HSMs non-volatile memory
- Allow applications to retrieve the value of the HSM's built-in clock
- Allow applications to set the value of the HSM's built-in clock
- Allow applications outside the HSM to read debug output from applications running within the HSM boundary
- Allow shares of keys to be transmitted over a secure channel between HSMs
- Permit arbitrary applications to be run within the HSM boundary
- Permit key management functionality

In an example, configurable properties specifying an identity of a cryptographic key include:
- The identity of the administrator key

In an example, configurable properties indicating operations that can be performed to the master key include properties that configure the HSM to:
- Allow master keys to be programmed into the HSM
- Allow master keys to be removed from the HSM

In an example, properties associated with a compliance mode of the HSM include at least one of:
- The current HSM mode
- The HSMs compliance capabilities, e.g. whether it claims compliance with FIPS 140-2 and if so at what level
- Whether a legacy version of the FIPS 140-2 compliance mode is enabled
- Whether the current version of the FIPS 140-2 compliance mode is enabled
- Whether an elDAS compliance mode is enabled
- Whether a future version of the FIPS 140-2 compliance mode is enabled

In an example, configurable properties indicating enabled/disabled cryptographic algorithms include properties that indicate at least one of:
- Whether a legacy RSA encryption algorithm is disabled
- Whether a particular policy is enforced for RSA key generation
- Whether Korean national cryptographic algorithms are permitted to be used
- Whether elliptic curve cryptographic algorithms are permitted
- Whether the ECCMQV algorithm is permitted
- Whether hardware acceleration for elliptic curve cryptography algorithms is acceptable

In an example, configurable properties indicating input/output settings of the HSM include configurable properties that indicate the HSM is configured to:
- Allow keys to be loaded from smartcards
- Allow data files to be loaded from smartcards and other kinds of device
- Allow shares of keys to be written to smartcards
- Allow data files to be written to smartcards and other kind of device
- Allow shares of keys to be erased from smartcards
- Allow data files to be erased from smartcards and other kind of device
- Allow smartcards and other kind of devices to be (re-)initialised for file storage
- Allow shares of keys on smartcards to have passed phrases modified
- Allow applications to access arbitrary smartcards by the HSMs smartcard reader In an example, attributes of the HSM include at least one of:
- The HSM serial number
- The identity of identifying keys embedded within the HSM

In an example, the cryptographic key obtained in step 201, stored in step 301, or requested in step 400 is a master cryptographic key. A master key is a cryptographic key that is used to secure a user's cryptographic keys. In particular, the master key is used to encrypt other cryptographic keys used by the user (e.g. application keys) for external storage or to generate other cryptographic keys used the user (e.g. application keys). Using the above-described methods with a master cryptographic key ensure that the master key can only be used when the configuration of the HSM is consistent with the policy bound to the master cryptographic key, i.e. when the HSM is configured according to the user requirements for the master key.

Since the master key directly or indirectly protects various application keys, preventing the use of the master key has the effect of preventing the improper use of any of the application keys. This is because the master key must be retrieved to use or generate any of the application keys. Consequently, since the master key cannot be used except in an appropriately configured HSM, the user's cryptographic keys also cannot be used except in an appropriately configured HSM.

In the example described above in relation to Fig. 3, the configuration of the HSM cannot be changed without proper authorisation. In an example, after the configuration is supplied to the HSM (e.g. during initialisation of the HSM), and the HSM configures itself according to the configuration, the HSM changes into an operational mode. Once in an operational mode the configuration of the HSM cannot be changed.

As described above, the methods described in relation to Fig. 2, Fig. 3 or Fig. 4 are implemented in the form of policy-checking code included in the firmware of the HSM. The policy bound to the first cryptographic key (i.e. the second information specifying the second configuration) is generated by the user using a general purpose computer. This may be implemented as policy-setting code that runs on a general purpose computer that carries out the HSM initialisation process on behalf of the user.

In the examples above, the policy is bound to the cryptographic key. In a further example the policy is cryptographically bound to the cryptographic key. In one example policies (i.e. information specifying the second configuration) are bound to cryptographic keys by means of a cryptographic integrity check covering the key and its policy. Optionally the binding between keys and policies may be established in some other way.

In the above described examples, the HSM device confirms that the master key is consistent with the HSM configuration specified by the user associated with the master key. The HSM performs a check before storing or before using the master key in order to enforce this consistency. Since the ACL specifying the permitted HSM configuration is provided to the HSM cryptographically bound to the master key, the HSM is able to enforce a consistency between the configuration and the master key. The consistency is therefore enforced by the HSM rather than a host system. The approach taken is to bind a policy to the master key which constrains it to be used only when the HSM is properly configured. Since the master key directly or indirectly protects all of the application keys protected by the HSM, preventing the use of the master key has the effect of preventing the improper use of any of the application keys.

Furthermore, by cryptographically binding master keys to associated policies, security is improved. The master key cannot be used except when installed into an appropriately configured HSM, and therefore the user's cryptographic application keys also cannot be used except in an appropriately configured HSM.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

### Appendix A

| **Command** | **Description** | |
|---|---|---|
| Cmd_InitialiseUnitEx | Responsible for setting policy information in the HSM. Its parameters are the properties to enable (for example AuditLogging and UseFIPSApprovedInternalMechanisms as discussed above) and the type to use for a signing key held within the HSM. | |
| Cmd_SetNSOPerms | Responsible for setting policy information in the HSM. Its parameters include the following additional properties: | |
| | | ∘ HKNSO, which is the identity of the administrator key |
| | | ∘ FIPS140Level3, which enables a legacy version of the FIPS 140-2 compliance mode |
| | | ∘ AlwaysUseStrongPrimes, which enforces a particular policy for RSA key generation |
| | | ∘ DisablePKCS1Padding, which disables a legacy RSA encryption algorithm |
| | | ∘ FIPSLevel3Enforcedv2, which enables the current version of the FIPS 140-2 compliance mode |
| | | ∘ CommonCriteriaCMTSRestrictions, which enables an eIDAS compliance mode |
| | | ∘ StrictSP80056Ar3, which (in conjunction with other properties) enables a future version of the FIPS 140-2 compliance mode |
| | | ∘ LoadLogicalToken, which allows keys to be loaded from smartcards |
| | | ∘ ReadFile, which allows data files to be loaded from smartcards and other kinds of device |
| | | ∘ WriteShare, which allows shares of keys to be written to smartcards |
| | | ∘ WriteFile, which allows data files to be written to smartcards and other kind of device |
| | | ∘ EraseShare, which allows shares of keys to be erased from smartcards |
| | | ∘ EraseFile, which allows data files to be erased from smartcards and other kind of device |
| | | ∘ FormatToken, which allows smartcards and other kind of devices to be (re-initialised for file storage |
| | | ∘ SetKM, which allows master keys to be programmed into the HSM |
| | | ∘ RemoveKM, which allows master keys to be removed from the HSM |
| | | ∘ ChangeSharePIN, which allows shares of keys on smartcards to have passed phrases modified |
| | | ∘ OriginateKey, which enables key generation without authorisation |
| | | ∘ NVMemAlloc which allows data file to be created in the HSMs nonvolatile memory |
| | | ∘ NVMemFree, which allows data files to be removed from the HSMs nonvolatile memory |
| | | ∘ GetRTC, which allows applications to retrieve the value of the HSM's built-in clock |
| | | ∘ SetRTC, which allows applications to set the value of the HSM's built-in clock |
| | | ∘ DebugSEEWorld, which allows applications outside the HSM to read debug output from applications running within the HSM boundary |
| | | ∘ SendShare, which allows shares of keys to be transmitted over a secure channel between HSMs |
| | | ∘ ForeignTokenOpen, which allows applications to access arbitrary smartcards by the HSMs smartcard reader. |
| Cmd_LoadBlob | Responsible for loading an encrypted message containing a key and policy into the HSM. Its parameters are the encrypted message and (optionally) an identifier for the key used to decrypt that message. It returns an identifier for the decrypted key. Other commands may use this identifier, but only in accordance with the policy retrieved from the original encrypted message. | |
| Cmd_SetKM | Responsible for programming a key into the HSM as a master key. Its parameter is an identifier for the key to program into the HSM, typically returned by Cmd_LoadBlob. | |

## Claims

1. A computer-implemented method for controlling use of a first cryptographic key in a device, wherein the device stores first information specifying the configuration of the device, the method comprising:
obtaining the first cryptographic key and second information specifying a device configuration for which use of the first cryptographic key is permitted;
comparing the second information with the first information to determine whether the first information is consistent with the second information; and
in response to determining that the first information is consistent with the second information, performing a first operation using the first cryptographic key on the device.

2. A computer-implemented method according to claim 1, wherein obtaining the first cryptographic key and the second information comprises:
receiving a command to store the first cryptographic key in a persistent storage of the device, wherein the command comprises the first cryptographic key in encrypted form and the second information, wherein the first cryptographic key and the second information are bound together, and wherein performing the first operation comprises storing the first cryptographic key in the persistent storage.

3. A computer-implemented method according to claim 2, further comprising:
in response to determining that the first information is not consistent with the second information, rejecting the command to store the first cryptographic key.

4. A computer-implemented method according to claim 1, wherein obtaining the first cryptographic key and the second information comprises:
retrieving the first cryptographic key and the second information from persistent storage of the device in response to receiving a command to use the first cryptographic key in the first operation.

5. A computer-implemented method according to claim 4, further comprising:
in response to determining that the first information is not consistent with the second information, rejecting the command to use the first cryptographic key in the first operation.

6. A computer-implemented method according any preceding claim, wherein the first operation comprises decrypting a second cryptographic key using the first cryptographic key or generating a second cryptographic key using the first cryptographic key.

7. A computer-implemented method according to any preceding claim wherein:
the first information comprises a first set of configurable properties;
the second information comprises a second set of configurable properties; and wherein:
the first and second set of configurable properties each comprise at least one of: an enabled functionality of the device, an identity of a cryptographic key, an operation that can be performed to the master key, a compliance mode of the device, enabled/disabled cryptographic algorithms, Input/Output settings of the device, and attributes of the device.

8. A computer-implemented method according to claim 7, wherein:
determining whether the first information is consistent with the second information comprises:
determining that the first information is consistent with the second information in response to determining that the first set of configurable properties consists of the second set of configurable properties.

9. A computer-implemented method according to claim 7, wherein:
determining whether the first information is consistent with the second information comprises:
determining that the first information is consistent with the second information in response to determining that the first set of configurable properties comprises the second set of configurable properties.

10. A computer-implemented method according to claim 9, wherein the first set of configurable properties comprises a first configurable property having a first value, the second set of configurable properties comprises the first configurable property having a second value and wherein determining whether the first information is consistent with the second information comprises:
determining that the first information is consistent with the second information in response to determining that first value is equal to or greater than the second value.

11. A computer-implemented method according to any preceding claim, wherein obtaining the first cryptographic key and second information comprises receiving the first cryptographic key and the second information combined and in encrypted form.

12. A computer-implemented method according to claim 11, wherein obtaining the first cryptographic key and second information comprises receiving cryptographic signature information.

13. A computer-implemented method, comprising:
generating a first cryptographic key and information specifying a device configuration for which use of the first cryptographic key is permitted;
generating a command to store the first cryptographic key in a device, wherein the command comprises the first cryptographic key in encrypted form, and the information specifying the device configuration, and wherein the first cryptographic key and the second information are bound together; and
sending the command to a device.

14. A computer-readable medium comprising instructions which, when executed by a processor, cause the processor to carry out the computer-implemented method of any preceding claim.

15. A device comprising:
a persistent memory configured to store first information specifying the configuration of the device; and
one or more processors, the one or more processors configured to:
obtain a first cryptographic key and second information specifying a device configuration for which use of the first cryptographic key is permitted;
compare the second information with the first information to determine whether the first information is consistent with the second information; and
in response to determining that the first information is consistent with the second information, perform a first operation using the first cryptographic key on the device.
